# DEMANDE DE BREVET EUROPEEN

(11) **EP 2 189 735 A2**
(43) Date de publication de la demande: **26.05.2010**
(21) Numéro de dépôt: 09176980.2
(22) Date de dépôt: 25.11.2009
(51) Int. Cl.: F24J 2/04, F24J 2/14, F24J 2/26

(54) **Capteur héliothermique amélioré**

(30) Priorité: 25.11.2008 FR 0858013
(71) Demandeur: Electricité de France, 75008 Paris (FR)
(72) Inventeur: Foissac, Guillaume, 77250 Moret-sur-Loing (FR); Radulescu, Mihai, 77250 Moret-sur-Loing (FR)
(74) Mandataire: Texier, Christian

(57) **Abrégé**

La présente invention concerne un capteur héliothermique pour le faîtage d'une toiture, **caractérisé en ce qu**'il comprend un corps de base (10) destiné à être agencé au niveau d'un faîtage d'une toiture, au moins un conduit (20) apte à conduire un fluide caloporteur, et au moins un réflecteur (30) formant avec le conduit au moins un ensemble d'absorption (24), le réflecteur étant porté par le corps de base (10) et étant agencé de manière à concentrer des rayons solaires en direction du conduit (20).

## Description

La présente invention concerne le domaine des capteurs héliothermiques. L'invention s'applique en particulier à l'alimentation de chauffe-eau solaires individuels. Notamment de tels capteurs peuvent être exploités dans le cadre d'un chauffe-eau solaire, d'un système combiné ou d'un système de production de froid solaire, dans une application en logement individuel, collectif ou tertiaire.
Plus généralement, l'invention concerne les bâtiments individuels, collectifs ou tertiaires munis d'un capteur héliothermique sur leur faîtage, combiné à un chauffe-eau solaire, un système combiné ou un système de production de froid solaire.
De nombreuses propositions techniques ont déjà été formulées dans ce domaine.
On trouvera en particulier des exemples de solutions connues dans les documents FR-A-2733305, WO-A-91/07558, WO-A-2006/081630, WO-A-2007/041264, EP 1 316 763 et WO 2007/146183.
Cependant, toutes les solutions jusqu'ici proposées soulèvent certaines difficultés.
En premier lieu, l'on citera le coût jugé souvent prohibitif des installations jusqu'ici proposées. Ainsi, malgré le fait que le marché des CESI (Chauffe Eau Solaire Individuel) croisse sur l'impulsion d'une politique énergétique forte , le rendement de ces installations est encore jugé peu satisfaisant et l'implantation de ces dernières reste complexe et contraignante.
D'autre part, compte tenu du respect des règles fixées par les Bâtiments de France, les Monuments Historiques et plus simplement de l'aspect esthétique d'une construction, les capteurs héliothermiques de toiture jusqu'ici proposés ne répondent pas aux contraintes d'intégration architecturale qu'entraîne leur implantation.
De plus les capteurs héliothermiques linéaires classiques, notamment pour un faîtage de toiture, ont un rendement limité. Enfin, les capteurs héliothermiques classiques, par exemple de type plan, demandent une exposition sur un pan de toiture orienté au maximum dans la direction Sud lorsque le bâtiment en question est dans l'hémisphère Nord (et donc un faitage orienté au maximum selon une direction Est-Ouest). En conséquence, dans le cas d'un faitage orienté Nord-Sud un capteur héliothermique classique est contre-indiqué car trop peu productif.
Dans ce contexte, la présente invention a pour but principal de développer un produit qui réponde aux problèmes précités et qui permette notamment d'ouvrir le marché des capteurs héliothermiques au plus grand nombre, tout en augmentant le rendement de ces derniers. Un autre but de l'invention est de proposer un capteur thermique linéaire qui soit universel ; c'est-à-dire qui puisse être installé sur un faîtage de toiture quelle que soit son orientation.

A cet effet, l'invention propose un capteur héliothermique pour le faîtage d'une toiture, caractérisé en ce qu'il comprend un corps de base destiné à être agencé au niveau d'un faîtage d'une toiture, au moins un conduit apte à conduire un fluide caloporteur, et au moins un réflecteur formant avec le conduit au moins un ensemble d'absorption, le réflecteur étant porté par le corps de base et étant agencé de manière à concentrer des rayons solaires en direction du conduit .

Ainsi, un capteur selon l'invention, grâce au(x) réflecteur(s) permet, en concentrant le rayonnement solaire sur le(s) conduit(s), d'améliorer sensiblement le rendement du capteur héliothermique quelle que soit l'intensité du rayonnement.

Avantageusement mais facultativement, l'invention comprend au moins l'une des caractéristiques suivantes :
- le capteur comprend une pluralité de conduits et une pluralité de réflecteurs respectivement associés pour former une pluralité d'ensembles d'absorption agencés radialement autour du faîtage,
- chaque conduit comprend une ailette d'absorption,
- le capteur comprend quatre ensembles d'absorption,
- le capteur forme un ensemble longitudinal de section constante,
- les ensembles d'absorption sont disposés symétriquement par rapport à un plan vertical du capteur,
- chaque réflecteur a une section sensiblement en forme de parabole, le conduit associé étant agencé au niveau du foyer de la parabole,
- le capteur comprend une vitre de couverture,
- le capteur comprend une masse de matériau thermiquement isolant entre le corps et le ou le réflecteur(s),
- le capteur comprend un conduit de retour du fluide caloporteur agencé sous le ou les ensemble(s) d'absorption.

D'autres caractéristiques, buts et avantages de la présente invention apparaîtront à la lecture de la description détaillée qui va suivre, et au regard des dessins annexés, à titre d'exemples non limitatifs et sur lesquels :
- la figure 1 représente une vue schématique en coupe verticale d'un capteur conforme à la présente invention,
- la figure 2 représente une vue en perspective éclatée d'un capteur conforme à la présente invention,
- la figure 3 représente une vue en perspective, assemblé, d'un capteur conforme à la présente invention,
- la figure 4 représente une vue schématique en coupe verticale d'un capteur conforme à la présente invention,
- les figures 5a, 5b et 5c représentent schématiquement respectivement une vue cavalière, une coupe et un embout d'un capteur conforme à la présente invention,
- les figures 6a, 6b, 6c et 6d représentent schématiquement respectivement une vue cavalière, une coupe et les deux embouts d'un capteur conforme à la présente invention.

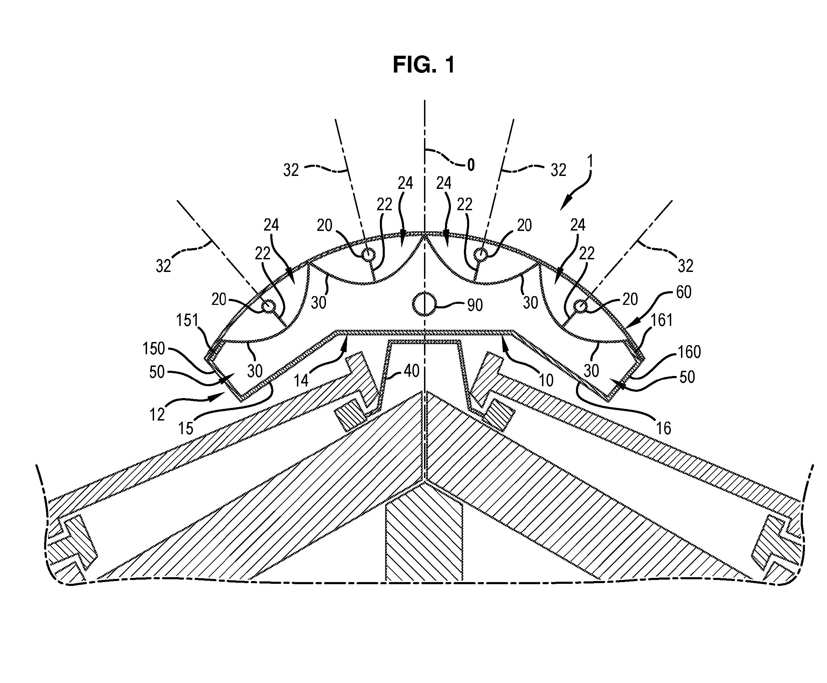

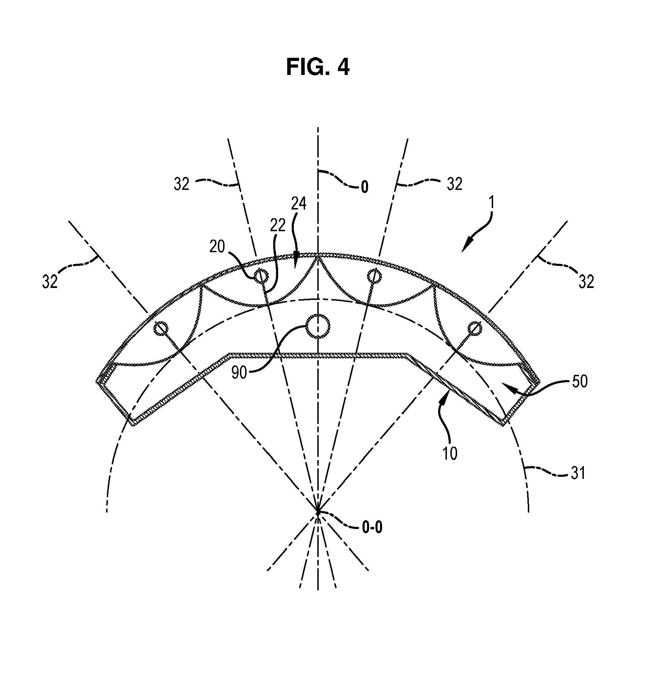

En référence à la figure 1, le capteur 1 conforme à la présente invention comprend pour l'essentiel un corps 10, au moins un conduit 20 et au moins un réflecteur 30 associé, le conduit et le réflecteur formant un ensemble d'absorption héliothermique 24. Le capteur est un capteur longitudinal de section constante et comprenant un corps 10 longitudinal. Le réflecteur 30 forme une gouttière rectiligne de section constante, préférentiellement en forme de parabole, le conduit longitudinal 20 associé étant agencé au niveau du foyer du réflecteur.
La combinaison d'un conduit 20 et d'un réflecteur 30 permet de concentrer les rayons solaires afin d'augmenter l'efficacité de l'exposition solaire.
Avantageusement, l'agencement d'une ailette d'absorption 22 au conduit 20 permet d'améliorer le rendement du capteur linéaire en augmentant la surface d'absorption de l'énergie solaire par le conduit.
L'ouverture du réflecteur 30 est soumise à un compromis entre la concentration de l'énergie solaire qui pousse à réduire l'ouverture absolue du réflecteur (c'est-à-dire à augmenter son ouverture angulaire) et la durée d'exposition solaire durant la journée du capteur qui pousse à augmenter l'ouverture absolue du réflecteur afin de profiter au maximum de la course du soleil (et donc à réduire l'ouverture angulaire du réflecteur).
On appelle « ouverture absolue » du réflecteur, la distance absolue entre les deux bords longitudinaux supérieurs du réflecteur 30. On appelle « ouverture angulaire », la longueur angulaire d'une section du réflecteur 30.
Selon un mode de réalisation préféré de la présente invention représenté à la figure 1, le capteur comprend plus particulièrement quatre conduits 20, chacun associé à un réflecteur 30, chaque conduit 20 comprenant une ailette 22, le tout formant quatre ensembles d'absorption 24. Les ensembles d'absorption 24 étant répartis radialement autour d'un axe longitudinal du capteur 1. Cet axe est référencé 0-0 sur la figure 4. Préférentiellement les ensembles d'absorbation 24 sont répartis de manière à former une symétrie du capteur par rapport à un axe vertical 0.
Ainsi un tel mode de réalisation présentant une pluralité d'ensembles thermiques répartis radialement autour du faîtage permet non-seulement d'obtenir un bon rendement du capteur linéaire mais d'augmenter aussi la durée d'exposition solaire du capteur sans être contraint par le compromis associé à l'ouverture des réflecteurs. Ce mode de réalisation permet également un agencement dudit capteur sur un faîtage orienté Nord-Sud auquel cas son rendement est maximal. Un tel capteur est également apte à être utilisé sur un faîtage orienté Est-Ouest. Un capteur selon l'invention est en conséquence universel en ce qu'il est apte à être fixé sur le faîtage d'une toiture quelles que soient son orientation et la position géographique de la construction.

De plus, le capteur selon l'invention ne nécessite pas de matériaux supplémentaires pour l'installation, réduisant les coûts et la complexité de l'installation du capteur et garanti garantissant l'étanchéité de la toiture par juxtaposition des modules les uns sur les autres.

Le nombre d'ensembles d'absorption 24 répartis radialement autour du faîtage est un compromis entre la taille d'un ensemble d'absorption et l'ouverture angulaire du capteur. En effet, l'espace entre la vitre 60 et le réflecteur 30 de chaque ensemble d'absorption doit être assez important pour permettre à l'air de jouer un rôle d'isolant (évitant ainsi que la chaleur du conduit ne se retransmette vers la vitre) et pas trop important pour éviter les effets de convection de l'air à l'intérieur du capteur ce qui a pour effet d'augmenter les pertes thermiques. De plus, il existe des contraintes liées aux tailles des conduits 20 et des réflecteurs 30 qui doivent respecter les tailles standard afin d'éviter un surcoût de production et des contraintes liées aux tailles classiques de faîtage.
Après analyse, l'ensemble de ces contraintes conduit à un compromis acceptable dans le mode de réalisation précité comprenant quatre ensembles d'absorption 24 avec une ouverture angulaire totale du capteur, c'est-à-dire l'ouverture angulaire correspondant au total de l'ouverture angulaire des quatre réflecteurs 30 de 180 à 90°, et préférentiellement d'environ 120°.

Avantageusement, selon l'invention le capteur est un capteur longitudinal ou linéaire, formé d'un ensemble allongé de section constante. Le capteur peut être divisé en plusieurs tronçons destinés à être juxtaposés longitudinalement qui, pour des questions de manipulation, sont de préférence d'une longueur inférieure à 2 m.

Préférentiellement, cet ensemble est recouvert d'une vitre 60 optiquement transparente, formée de préférence d'un secteur de cylindre concave en direction du corps 10.
On entend par le terme « concave » une trajectoire dont l'épigraphe est tournée vers le bas.

Il est à noter que, par la géométrie longitudinale du corps 10, le capteur est adapté pour être fixé en faîtage d'une toiture en remplacement des tuiles existantes et que la répartition radiale des ensembles d'absorption 24 permet de limiter la détérioration esthétique de la toiture par rapport aux capteurs plans classiques.

Avantageusement, le capteur comprend également une platine 12 formant la base, de préférence en métal ou en polymère, en forme de gouttière rectiligne présentant une concavité vers le bas complémentaire de l'enveloppe supérieure du faîtage de la toiture afin de faciliter la fixation ou l'intégration du capteur sur le faitage.
La platine 12 comprend une base centrale plane 14, sensiblement horizontale, prolongée de part et d'autre par des ailettes 15, 16 inclinées vers le bas en éloignement de la base 14. Ces ailettes, 15 et 16 sont elles-mêmes prolongées par des ailettes secondaires 150, 160, dirigées vers le haut et comportant des retours respectifs 151, 161 à leur sommet, dirigés vers le centre du capteur.

La base centrale 14 est adaptée pour être fixée sur un module 40 permettant la fixation du capteur sur le faîtage de la toiture, plus particulièrement sur la charpente. Le module de fixation 40 peut également faire l'objet de nombreux modes de réalisation. Selon le mode de réalisation particulier représenté sur la figure 1, le module 40 est formé d'une goulotte en forme de U à concavité dirigée vers le bas, dont la partie haute centrale 42 est fixée par tout moyen approprié sur la base 14 (visserie, matériaux de collage, éléments de serrage, rivets , ...).

Les différents ensembles d'absorption du capteur sont disposés symétriquement par rapport à un axe vertical longitudinal 0 du capteur.

Une telle répartition symétrique des ensembles d'absorption 24 permet d'augmenter le temps d'exposition du capteur au soleil, en offrant une large ouverture. Ce cas est notamment avantageux dans le cas d'une toiture dont le faîtage est orienté Nord-Sud.

Cependant dans le cas d'une toiture dont l'exposition solaire est inégalement répartie sur les deux pans, par exemple dans le cas où le faîtage est orienté Est-Ouest dans l'hémisphère nord, avec une exposition quasi-exclusive du pan orienté au Sud (pour les constructions le plus au Nord notamment), il est prévu que les ensembles d'absorption soient inégalement répartis par rapport à l'axe vertical 0. Dans le cas où un seul pan de la toiture est exposé durant la journée, alors les ensembles d'absorption du capteur pourront être agencés sur ce même pan.

Avantageusement, il est prévu une unité de contrôle associée au capteur, l'unité de contrôle étant liée à un moyen de mesure solaire afin de connaître la position du soleil et l'intensité de son rayonnement. L'unité de contrôle permet donc de condamner le ou les conduit(s) qui sont trop peu ou pas exposés au rayonnement solaire (du fait de la position du soleil ou d'une zone d'ombre englobant le capteur) afin de ne pas réduire le rendement global du capteur.

Avantageusement les réflecteurs 30 et les conduits 20 sont portés par le corps 10, plus précisément par une masse de matériau thermiquement isolante et rigide 50 intercalée entre la surface supérieure du corps 10 et les réflecteurs 30.

Selon un mode privilégié de réalisation de l'invention, les réflecteurs 30 sont de type parabolique. Ils sont ainsi formés de gouttières rectilignes de section constante dont la section est en forme de parabole, leurs conduits longitudinaux respectifs 20 étant agencés au niveau de leur foyer. Chaque conduit 20 porte une ailette 22, de préférence disposée dans le plan de symétrie 32 du réflecteur 30 entre le conduit 20 et le réflecteur 30, permettant de capter directement les rayons du soleil arrivant de biais par rapport au plan de symétrie 32 et de fournir ainsi par conduction, l'énergie de ces rayons du soleil au conduit 20. Les ailettes 22 et le conduit 20 sont donc recouverts d'un revêtement thermiquement absorbeur. Enfin l'air entre les conduits 20, les réflecteurs 30 et la vitre 60 joue le rôle d'isolant thermique.

Afin d'éviter de dissiper une partie de l'énergie des rayons solaires dans ces réflecteurs 30 au lieu de la dissiper dans les conduits 20, les ailettes 22 sont maintenues à une distance minimum, de préférence de 2mm, des réflecteurs 30.

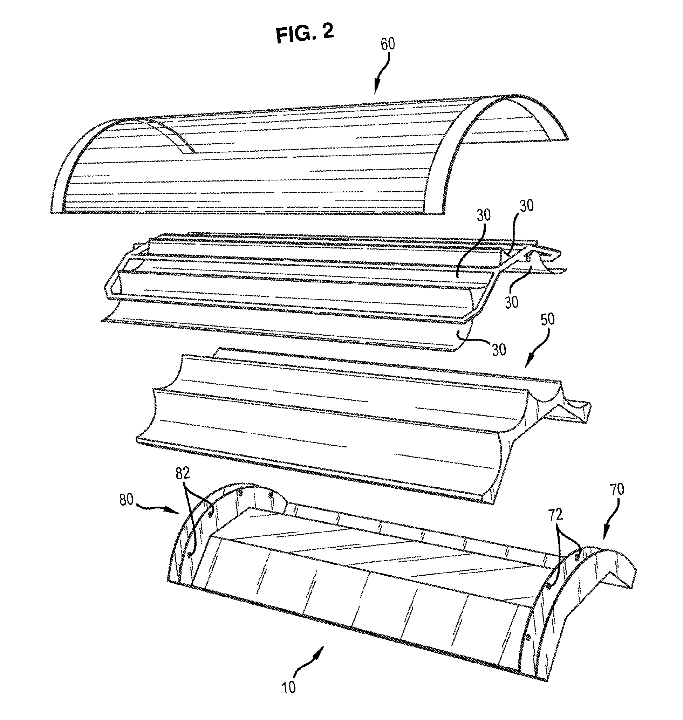

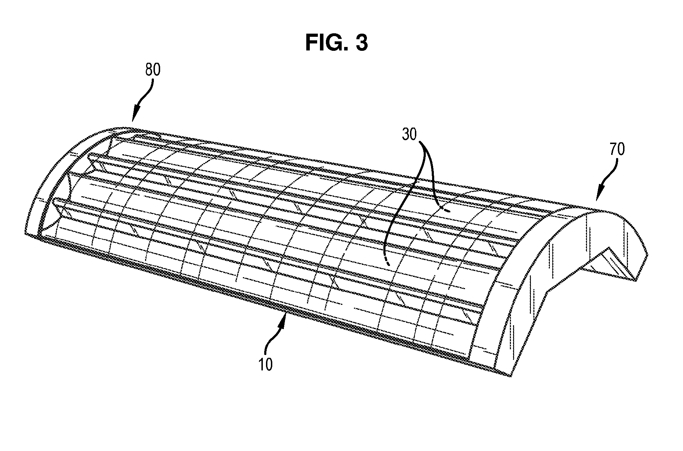

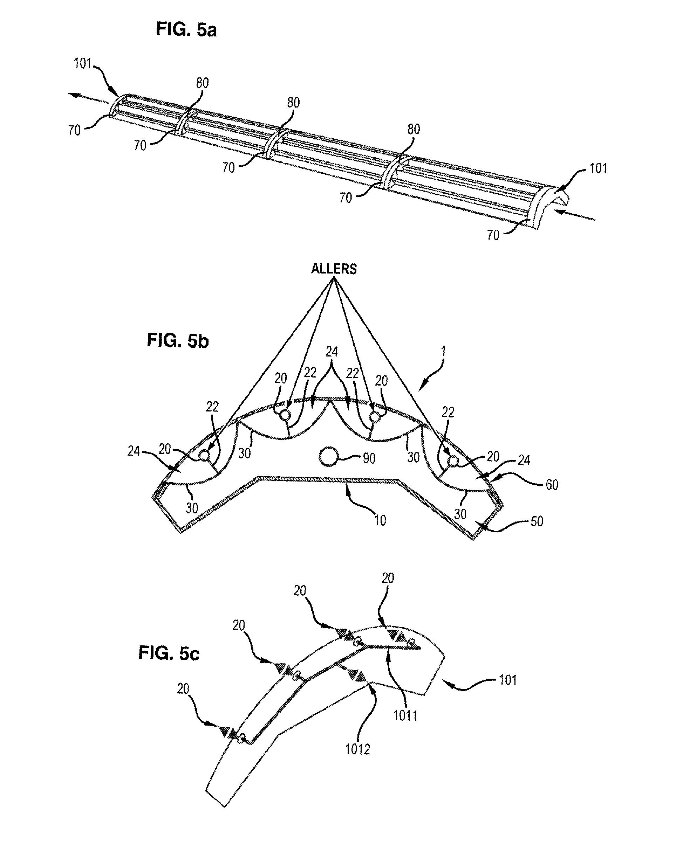

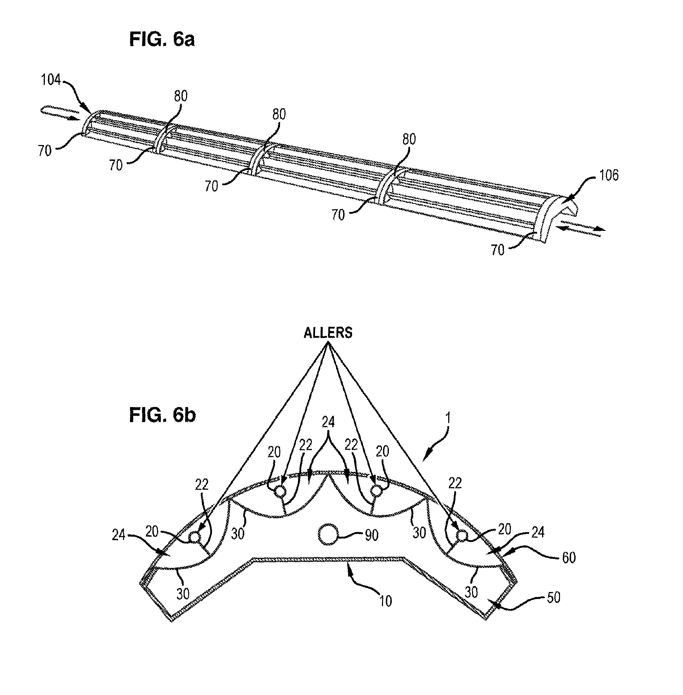

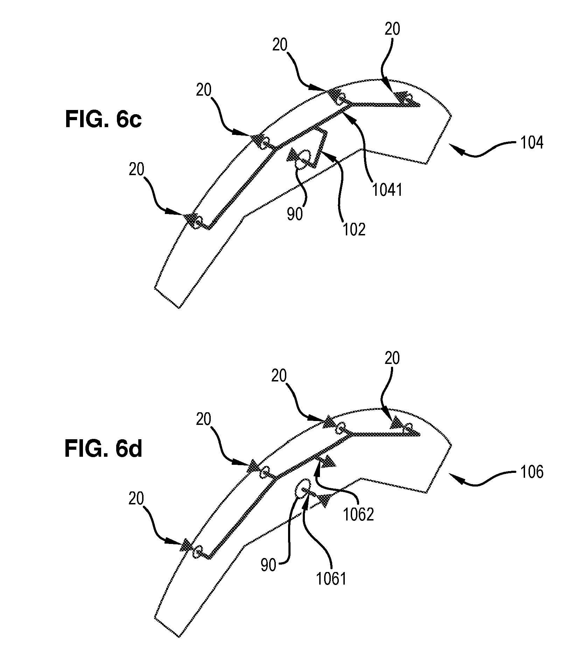

En référence aux figures 2 et 3, le capteur comporte au moins un tronçon, fermé à ses extrémités longitudinales par des embouts 70 et 80 visibles sur la figure 2. Les embouts 70 et 80 comportent respectivement des orifices 72, 82. La tenue mécanique des ensembles d'absorption 24, soit l'ensemble conduit 20, ailette 22 et réflecteur 30, s'effectue alors aux extrémités de chaque tronçon. Les orifices 72 et 82 permettent la circulation du fluide entre les conduits du tronçon et l'extérieur du tronçon. Les ailettes 22 portées par les conduits ne touchent pas les réflecteurs 30, évitant toute fuite thermique par contact avec les réflecteurs 30 comme expliqué précédemment.
Les réflecteurs 30 des ensembles d'absorption sont adjacents, répartis parallèlement entre eux et de manière radiale le long du faîtage.
Comme représenté à la figure 4, les plans de symétrie respectifs 32 de chaque réflecteur s'étendent avantageusement selon des plans radiaux par rapport à un centre commun qui coïncide avec le centre de la vitre 60. En d'autres termes, les points d'intersection respectifs des réflecteurs 30 et de leurs plans de symétrie 32, sont répartis le long d'une trajectoire concave 31, par exemple cylindrique ou elliptique dont le centre coïncide avec le centre des plans de symétrie 32 des réflecteurs 30 et le centre de la vitre 60.
En référence aux figures 5a, 5b et 5c, le capteur installé en faîtage de toiture se présente sous forme d'une pluralité de tronçons de longueur individuelle finie, comportant les embouts 70, 80, sur leurs extrémités longitudinales. Ces embouts 70, 80 sont conçus pour permettre un raccordement aisé entre deux tronçons adjacents en assurant une liaison entre les conduits 20 de deux tronçons adjacents et garantir l'étanchéité de la toiture.
Dans ce contexte, la liaison fluidique définie avec les conduits 20 peut prévoir une entrée de fluide sur l'un des embouts 70 et une sortie du fluide sur l'embout 80 opposé. Aux extrémités du capteur, sont agencés des embouts 101 permettant de regrouper au sein d'un collecteur 1011 les flux de chaque conduit 20 en entrée et en sortie 1012 du capteur.
Alternativement, comme représenté aux figures 6a, 6b, 6c et 6d, il est prévu que l'entrée et la sortie du fluide soient agencées sur un même embout commun, en assurant par exemple un trajet aller du fluide caloporteur, par un conduit auxiliaire 90, à partir d'une entrée de fluide sur l'embout 70 vers l'embout 80 au niveau duquel le fluide est réparti par un collecteur 1041 d'un module 104 approprié entre l'ensemble des conduits 20, lesquels assurent le retour de fluide vers l'embout 70. Dans ce cas, lorsque l'on souhaite relier bout à bout une pluralité de capteurs conformes à la présente invention, il est prévu que les embouts 70 et 80 soient appropriés au niveau des liaisons intermédiaires entre deux tronçons adjacents, pour assurer les liaisons respectives entre les conduits aller 90 et les conduits 20.
L'entrée 1061 et la sortie 1062 du fluide caloporteur se font alors au niveau d'une extrémité commune du capteur avec un conduit auxiliaire 90 via un module additionnel 106. Un tel agencement de la circulation du fluide caloporteur dans le capteur permet de simplifier l'interconnexion d'une canalisation de transport du fluide caloporteur au reste de l'installation (par exemple à un chauffe-eau) en ce que l'interconnexion est effectuée uniquement sur une extrémité du capteur, évitant ainsi tout autre canalisation supplémentaire.

Selon un mode préférentiel de réalisation :
- la vitre 60 est réalisée en polyméthacrylate de méthyl ou plexiglass, voire en verre,
- les conduits 20 et leurs ailettes 22 sont réalisés en métal (cuivre, aluminium ou acier) revêtu d'un revêtement absorbant, tel qu'une peinture noire ou un revêtement sélectif,
- les réflecteurs 30 sont réalisés préférentiellement en aluminium et avec un indice de réflexion proche de 0,95,
- la masse de matériau isolant 50 est une mousse de polyuréthane,
- le diamètre nominal des conduits 20 est d'environ 10 à 20mm, préférentiellement d'environ 14mm,
- la hauteur des ailettes support 22 est d'environ 15 à 30mm, typiquement d'environ 25mm,
- le rayon moyen de la vitre 60 est d'environ 200 à 400mm, typiquement d'environ 250mm,

Le fluide caloporteur circulant dans les conduits 20 peut être formé de tout fluide approprié. Le cas échéant, il s'agit directement d'eau sanitaire, ce qui simplifie l'installation.

Le volume du capteur situé entre la vitre 60 et le réflecteur 30 peut être rempli par de l'air, un gaz neutre tel que l'argon, ou encore être placé sous vide, ce qui augmente sensiblement le rendement du capteur.

L'homme de l'art comprendra que la présente invention propose un capteur héliothermique linéaire qui placé en faîtage remplace avantageusement les tuiles faîtières, permettant ainsi un rendement optimal quelle que soit l'orientation de la toiture support. Ce rendement est augmenté notamment par la présence des réflecteurs permettant une concentration de l'énergie solaire mais également par l'ouverture du réflecteur qui permet une exposition maximale au rayonnement solaire durant la journée. De plus, afin d'augmenter la durée d'exposition du soleil, le capteur est divisé en une pluralité d'ensembles d'absorption agencés radialement autour du faîtage. La conception par modules de petite taille connectables entre eux du capteur conforme à la présente invention, permet un transport et une installation aisés ainsi qu'une adaptation fine aux besoins de l'habitant. La présente invention permet par ailleurs de diminuer les coûts de pose par rapport à la plupart des capteurs héliothermiques connus.
La présente invention permet ainsi de donner accès à une source d'énergie renouvelable au plus grand nombre, sans contrainte d'orientation de bâtiment et d'intégration architecturale, dans une optique de réduction de coût. Le système de capteur conforme à la présente invention, destiné à être intégré au bâti est adapté aussi bien au marché de l'existant (en remplacement de tuiles faîtières existantes) qu'au marché de la maison neuve.
L'homme de l'art comprendra en effet que l'utilisation d'une pluralité de réflecteurs répartis de part et d'autre du plan de symétrie verticale de la toiture permet de garantir, pour une large plage d'implantation géographique, la récupération d'énergie solaire quelle que soit l'orientation de la toiture, quelle que soit la saison considérée et quelle que soit l'heure de la journée.
Bien entendu, la présente invention n'est pas limitée aux modes de réalisation qui viennent d'être décrits mais s'étend à toute variante conforme à son esprit.

## Revendications

1. Capteur héliothermique pour le faîtage d'une toiture, **caractérisé en ce qu'**il comprend
un corps de base (10) destiné à être agencé au niveau d'un faîtage d'une toiture,
au moins un conduit (20) apte à conduire un fluide caloporteur, et
au moins un réflecteur (30) formant avec le conduit au moins un ensemble d'absorption (24), le réflecteur étant porté par le corps de base (10) et étant agencé de manière à concentrer des rayons solaires en direction du conduit (20).

2. Capteur héliothermique selon la revendication 1, **caractérisé en ce qu'**il comprend une pluralité de conduits (20) et une pluralité de réflecteurs (30) respectivement associés pour former une pluralité d'ensembles d'absorption (24) agencés radialement autour du faîtage.

3. Capteur héliothermique selon la revendication 1 ou 2, **caractérisé en ce que** chaque conduit comprend une ailette d'absorption (22).

4. Capteur héliothermique selon l'une des revendications 1 à 3, **caractérisé en ce qu'**il comprend quatre ensembles d'absorption.

5. Capteur héliothermique selon l'une des revendications 1 à 4, **caractérisé en ce qu'**il forme un ensemble longitudinal de section constante.

6. Capteur héliothermique selon l'une des revendications 1 à 5 en combinaison avec la revendication 2, **caractérisé en ce que** les ensembles d'absorption sont disposés symétriquement par rapport à un plan vertical du capteur.

7. Capteur selon l'une des revendications 1 à 6, **caractérisé en ce que** chaque réflecteur (30) a une section sensiblement en forme de parabole, le conduit (20) associé étant agencé au niveau du foyer de la parabole.

8. Capteur selon l'une des revendications 1 à 7, **caractérisé par le fait qu'**il comprend une vitre (60) de couverture.

9. Capteur selon l'une des revendications 1 à 8, **caractérisé en ce qu'**il comprend une masse de matériau thermiquement isolant (50) entre le corps (10) et le ou les réflecteur(s) (30).

10. Capteur selon l'une revendication 1 à 9 **caractérisé en ce qu'**il comprend un conduit de retour du fluide caloporteur agencé sous le ou les ensemble(s) d'absorption.

11. Capteur selon l'une revendication 1 à 10 **caractérisé en ce que** la hauteur de ou des ailette(s) d'absorption (22) est d'environ 15 à 30mm, typiquement d'environ 25mm.

12. Capteur selon l'une revendication 1 à 11 **caractérisé en ce que** l'ouverture angulaire correspondant au total de l'ouverture angulaire des ensembles d'absorption (24) est de 180 à 90°, et préférentiellement d'environ 120°.
